# EUROPÄISCHE PATENTANMELDUNG

(11) **EP 0 634 563 A1**
(43) Veröffentlichungstag der Anmeldung: **18.01.1995**
(21) Anmeldenummer: 94108754.6
(22) Anmeldetag: 08.06.1994
(51) Int. Cl.: F01K 25/00, B64D 11/00

(54) **Verfahren und Einrichtung zur Durchführung des Verfahrens zur Wasserversorgung an Bord eines Flugzeuges**

(30) Priorität: 15.07.1993 DE 4323719
(71) Anmelder: Daimler-Benz Aerospace Airbus Gesellschaft mit beschränkter Haftung, D-21129 Hamburg (DE)
(72) Erfinder: Draht, Jürgen, D-82054 Sauerlach (DE); Nitschke, Felix, Dr., D-81371 München (DE); Popp, Robert, D-81247 München (DE); Pröls, Rudolf, D-81737 München (DE); Rittel, Thomas, D-81369 München (DE); Scherer, Thomas, Dr., D-22587 Hamburg (DE); Zimmermann, Werner, D-85640 Putzbrunn (DE)
(74) Vertreter: Hansmann, Dierk, Dipl.-Ing.

(57) **Zusammenfassung**

Um den immer höheren Passagierzahlen und erhöhtem Komfortbedarf gerecht zu werden, muß die verfügbare Wassermenge an Bord eines Flugzeuges steigen, was erforderlich macht, daß während des Fluges an Bord eines Flugzeuges zumindest teilweise das für die Wasserversorgung benötigte Wasser erzeugt wird.

Bei einem solchen Verfahren bestellt die Erfindung darin, daß die bei der Verbrennung des Brennstoffes im Triebwerk entstehenden Abgase an geeigneter Stelle hinter einer Turbinenstufe entnommen werden, die entnommenen Abgase auf eine solche Temperatur abgekühlt werden, daß ein wesentlicher Teil des als Verbrennungsprodukt im Abgas enthaltenen Wassers auskondensiert, das auskondensierte Wasser mit geeigneten Mitteln, beispielsweise Wasserabscheider, aus den abgekühlten Abgasen abgeschieden wird, das abgeschiedene Wasser gesammelt wird, das gewonnene Wasser bis zu einer geforderten Wasserqualität aufbereitet wird und das aufbereitete Wasser entsprechend der Weiterverwendung in einem Wassertank gesammelt wird oder vorhandenen Wasserversorgungssystemen zugeführt wird.

Damit wird eine Verringerung des Fluggewichts erreicht und die üblicherweise für Wassermengen notwendigen Transportkapazitäten können eingeschränkt werden.

## Beschreibung

Die Erfindung betrifft ein Verfahren und eine Einrichtung zur Durchführung des Verfahrens zur Wasserversorgung an Bord eines mit Triebwerken ausgerüsteten Flugzeuges, welches mit einem Brennstoff, beispielsweise Kerosin oder Wasserstoff angetrieben wird.

Bei Flugzeugen, insbesondere bei Großraumflugzeugen sind bestehende Wasserversorgungssysteme unter anderem mit Frischwassertanks ausgestattet, die die gesamte Trink- und Brauchwassermenge aufnehmen. Bedingt durch die steigende Zahl an Passagieren sowie einen erhöhten Komfortbedarf, beispielsweise das Duschen oder Waschen während des Fluges bei Langstreckenflügen, wird die notwendige Wassertankkapazität steigen und größere Wassertanks erforderlich machen. Diese Kapazität bringt folglich ein erhöhtes Fluggewicht mit sich, was andererseits eine Verringerung der möglichen Ladekapazität bedeutet.

Aus der DE-PS 37 15 759 ist eine Lösung zur Wasserversorgung an Bord eines Flugzeuges bekannt. In einem Wassersystem wird mittels einer Abwasseraufbereitungseinrichtung an Bord eines Flugzeuges schon gebrauchtes Wasser wieder aufbereitet und das aufbereitete Wasser wird erneut zumindest als Brauchwasser dem Wasserversorgungssystem zugeführt. Damit ist erreicht, daß mit gleicher Wasserkapazität einer höheren Passagierzahl oder höheren Komfortbedürfnissen Rechnung getragen wird. Diesem Vorteil steht gegenüber, daß eine Abwasseraufbereitung bei vorgegebenen Qualitätsanforderungen einen hohen technischen Aufwand erfordert, was gleichzeitig mit einer Einrichtung zur Durchführung der Abwasseraufbereitung ein erhöhtes Fluggewicht bedeutet. Weiterhin ist in dieser Lösung als nachteilig anzusehen, daß eine bestimmte Wassermenge an Bord eines Flugzeuges immer zur Verfügung stehen muß und in entsprechenden Tanks, entweder Frischwasser- oder Abwassertanks, transportiert wird, was nur eine begrenzte Verringerung der zu transportierenden Wassermenge und damit auch nur eine begrenzte Verkleinerung der erforderlichen Tankkapazität mit sich bringt.

Demgemäß liegt der Erfindung die Aufgabe zugrunde, ein Verfahren und eine Einrichtung zur Durchführung des Verfahrens der einleitend genannten Art zu schaffen, mit denen es möglich ist, während des Fluges an Bord eines Flugzeuges zumindest teilweise das für die Wasserversorgung benötigte Wasser zu erzeugen, und damit eine Verringerung des Fluggewichts zu erreichen und die üblicherweise für Wassermengen notwendigen Transportkapazitäten einzuschränken.

Diese Aufgabe ist bei einem gattungsgemäßen Verfahren dadurch gelöst, daß die bei der Verbrennung des Brennstoffes im Triebwerk entstehenden Abgase an geeigneter Stelle hinter einer Turbinenstufe entnommen werden, die entnommenen Abgase auf eine solche Temperatur abgekühlt werden, daß ein wesentlicher Teil des als Verbrennungsprodukt im Abgas enthaltenen Wassers auskondensiert, das auskondensierte Wasser mit geeigneten Mitteln, beispielsweise Wasserabscheider, aus den abgekühlten Abgasen abgeschieden wird, das abgeschiedene Wasser gesammelt wird, das gewonnene Wasser bis zu einer geforderten Wasserqualität aufbereitet wird und das aufbereitete Wasser entsprechend der Weiterverwendung in einem Wassertank gesammelt wird oder vorhandenen Wasserversorgungssystemen zugeführt wird.

Insbesondere vorteilhaft ist, daß während des Fluges an Bord eines Flugzeuges der wesentliche Anteil des für die Wasserversorgung benötigten Wassers erzeugt werden kann, die Transportkapazität für das benötigte Wasser eingeschränkt wird und somit ein geringeres Fluggewicht erreicht wird.

Vorteilhafte Weiterbildungen und zweckmäßige Ausgestaltungen ergeben sich aus den Unteransprüchen.

Die Erfindung wird nachstehend beschrieben und das Verfahren anhand des in der Zeichnung dargestellten Ausführungsbeispieles der Einrichtung zur Durchführung des Verfahrens näher erläutert.

Es zeigt die
- Fig. 1: eine schematische Darstellung des Ablaufs des Verfahrens zur Wasserversorgung an Bord eines Flugzeuges,
- Fig. 2: ein schematisch dargestelltes Ausführungsbeispiel einer Wassergewinnungsanlage an Bord eines Flugzeuges.

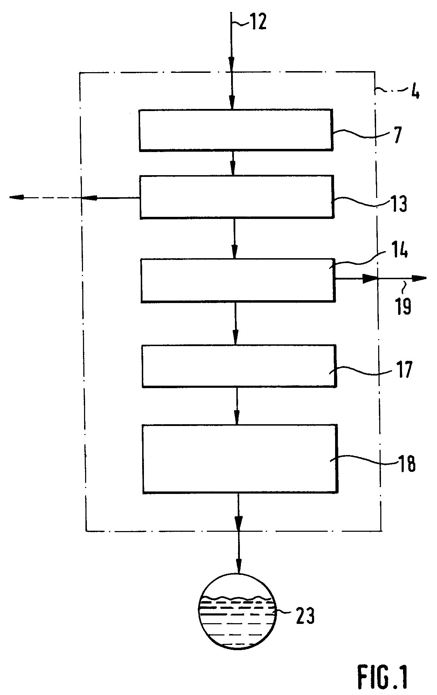

In der Fig. 1 ist der Ablauf des Verfahrens zur Wasserversorgung schematisch dargestellt. Erfindungsgemäß wird dabei der wesentliche Teil des benötigten Wassers an Bord eines Flugzeuges während des Fluges erzeugt. Ein Abgasstrom 12, der bei der Verbrennung von beispielsweise Kerosin in einem Triebwerk entsteht, wird an geeigneter Stelle zumindest teilweise entnommen und einer Wassergewinnungsanlage 4 zugeführt. Die Wassergewinnungsanlage 4 wirkt im wesentlichen in der Art, daß das hinter den Turbinenstufen zumindest teilweise entnommene Abgas 12 mittels einer Abgasleiteinrichtung 7 weitergeleitet wird, auf eine solche Temperatur in einer Kühleinrichtung 13 abgekühlt wird, daß ein wesentlicher Teil des im Abgas 12 enthaltenen Wassers auskondensiert. Das auskondensierte Wasser wird mit geeigneten Mitteln, vorzugsweise einem Wasserabscheider 14, abgeschieden und das so gewonnene Wasser wird durch entsprechende konstruktive Maßnahmen am Ende des Wasserabscheiders 14, zum Beispiel unter Ausnutzung der Schwerkraft oder der Fliehkraft im rotierenden Luftstrom, gesammelt. Ein Restabgasstrom 19 wird abgeleitet und kann beispielsweise der im Triebwerk strömenden Bypass-Luft beigemischt werden. Entsprechend der Weiterverwendung wird das gesammelte Wasser mittels einer Pumpeinrichtung 17 gegebenenfalls bis zu einer geforderten Wasserqualität in einer Wasseraufbereitungseinrichtung 18 aufbereitet und einem Wassertank 23 und/oder vorhandenen Wasserversorgungssystemen zugeführt.

Beim Abkühlen in der Kühleinrichtung 13 entsteht nutzbare Energie, in Form von Wärmeenergie, die vorteilhaft weitergenutzt werden kann. Sie ist nutzbar, wie beispielsweise in der nachfolgend beschriebenen Ausführungsform beschrieben, indem die von einer als Wärmetauscher ausgebildeten Kühleinrichtung 13 abgegebende Wärme für das Aufheizen des Bypass-Luftstromes des Triebwerkes dient und so zu einer Schuberhöhung führt, die den abgezapften Aggasstrom teilweise kompensiert.

In einer weiteren Ausgestaltung kann die Wärmeenergie genutzt werden, um das verbrauchte Wasser aus den Abwassertanks durch Eindampfen zu reduzieren. Eine Gewichtseinsparung durch weniger Abwasservolumen und damit einer Verkleinerung entsprechender Abwassertanks ist damit erreichbar.

Eine Wassergewinnung aus den Abgasen eines Triebwerkes ist vorteilhaft, da nach bekannten chemischen Formeln bei einer Verbrennung von Kerosin ungefähr in einem Gewichtsverhältnis von 1 : 1,3 bis 1,4 aus Kerosin Wasser entsteht.

Beim Brennstoff Wasserstoff ist das Gewichtsverhältnis von Brennstoff zu erzeugbarem Wasser mit 1 :8,9 noch bedeutend günstiger.

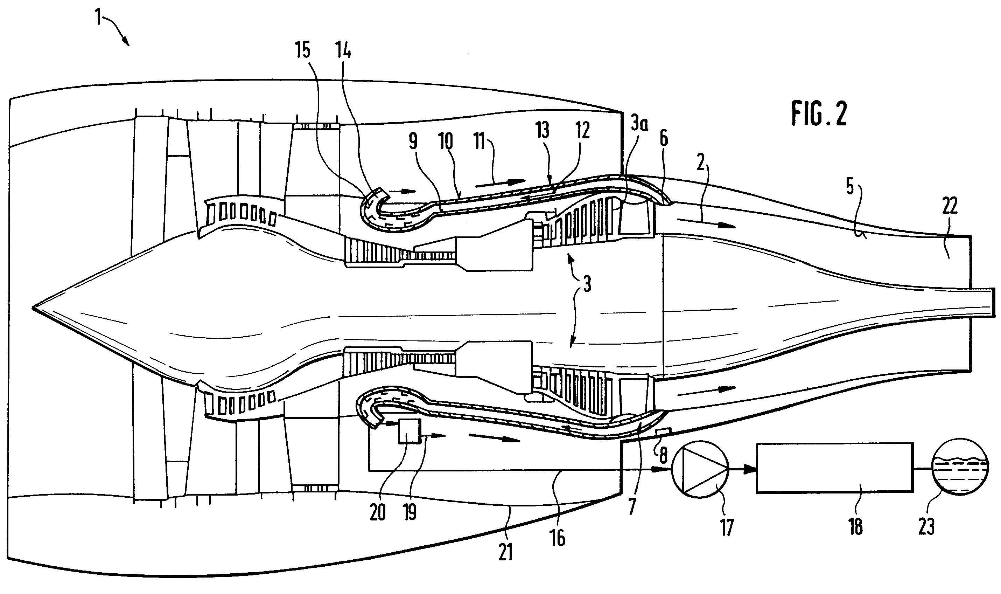

In Fig. 2 ist ein herkömmliches Strahltriebwerk 1 ersichtlich, welches im wesentlichen aufgebaut ist aus bekannten Elementen. Üblicherweise werden großräumige Flugzeuge mit solchen Triebwerken ausgerüstet, die mit einem Brennstoff, vorzugsweise Kerosin oder in Zukunft auch mit Wasserstoff, angetrieben werden. Das Triebwerk 1 ist sowohl für den Antrieb des Flugzeuges als auch erfindungsgemäß zur zumindest teilweisen Wasserversorgung vorgesehen. Um die Funktion der Wasserversorgung während des Fluges zu realisieren, wird das bei der Verbrennung vom Brennstoff Kerosin oder Wasserstoff entstehende Verbrennungsprodukt Wasser aus den Abgasen der Triebwerke gewonnen. Zu diesem Zweck müssen die während des Betriebes des Triebwerkes 1 durch Verbrennen entstehenden Abgase 2 und nach dem Verrichten von Arbeit in den Turbinenstufen 3 zumindest teilweise der Wassergewinnungsanlage 4 zugeführt werden. Die Entnahme des Abgases erfolgt an geeigneter Stelle hinter den Turbinenstufen 3 des Triebwerkes 1. Vorzugsweise erfolgt die Ableitung der Abgase hinter der letzten Turbinenstufen 3a und vor der Zumischung eines Bypass-Luftstromes 11. Eine am Umfang eines Düsenmantels 5 vorgesehene Entnahmeöffnung 6, die zum Beispiel spaltförmig ausgebildet ist, ist vorzugsweise hinter der letzten Turbinenstufe 3a angeordnet. Die Anordnung der Entnahmeöffnung 6 kann sich entsprechend der Anpassung an bestimmte Triebwerksbedingungen verändern, wobei die nachfolgenden Kriterien eingehalten werden müssen.
Das Verbrennungsprodukt H₂O muß in einer ausreichend hohen Konzentration vorliegen, um einen Wasserdampfpartialdruck von deutlich über 6,1 mbar im Wasserabscheider zu erreichen. Bei niedrigeren Partialdrücken fällt das Wasser im Form von Eis an und muß mit einer zusätzlichen Vorrichtung gesammelt und verflüssigt werden.

Die Druckdifferenz zwischen dem Triebwerksabgas an der Entnahmestelle und dem Luftstrom an der Ausströmstelle muß ausreichend sein, um im nachfolgenden Kühl- und Wasserabscheidungsprozeß den Gegendruck zu überwinden.

An die Entnahmeöffnung 6 ist eine Abgasleiteinrichtung 7 angeschlossen, die einen Abgasluftstrom 12 in Richtung einer Kühleinrichtung 13 leitet. Innerhalb der Abgasleiteinrichtung 7 ist eine Regeleinrichtung 8 vorgesehen. Diese regelt die Menge des entnommenen Abgases 12 und reagiert auf entsprechende Stellgrößen, beispielsweise die Menge des zu erzeugenden Wassers und die Austrittstemperatur an der Kühleinrichtung 13. Die Abgasleiteinrichtung 7 ist in dieser Ausgestaltungsform als doppelwandige Röhre mit einer Innenwand 9 und einer Außenwand 10 ausgebildet, deren Innenwand 9 gleichzeitig die Kerntriebwerksverkleidung und deren Außenwand 10 gleichzeitig als Abgrenzung zum Bypass-Luftstrom 11 dient. In dieser Ausgestaltung ist ein Bereich der Außenwand 10 gleichzeitig ein Hautwärmetauscher, der die Funktion der Kühleinrichtung 13 erfüllt. Mit dem Vorbeiströmen des Bypass-Luftstromes 11 an dem für die Wassergewinnung entnommenen Abgasluftstrom 12 werden die entnommenen Abgase 12 unter den Taupunkt des im Abgas enthaltenen Wassers abgekühlt, d. h. sie werden auf eine solche Temperatur gebracht, bei der das im Abgas 12 enthaltene Wasser auskondensiert. Das auskondensierte Wasser wird aufgefangen mit einem Wasserabscheider 14, der in dieser Ausgestaltungsform durch entsprechende Profilierung, beispielsweise hakenförmige Profile 15 im Endbereich der Abgasleiteinrichtung 7 gebildet ist. Unter Ausnutzung der Schwerkraftwirkung wird das aufgefangene Wasser am Ende des Wasserabscheiders 14 gesammelt und über eine Sammelleitung 16, die in vertikaler Richtung am annähernd untersten Punkt des Wasserabscheiders 14 angeschlossen ist, mittels der Pumpe 17 zur Wasseraufbereitungseinrichtung 18 geleitet. Der verbleibende Restabgasstrom 19 wird dem Bypass-Luftstrom 11 beigemischt und wie dieser bekanntermaßen weitergeleitet. Um eine Entnahme des Abgasstromes zur Wassergewinnung 12 und ein Weiterleiten innerhalb der Abgasleiteinrichtung 7 zu ermöglichen, wird mittels eines Ejektors 20 am Ende der Abgasleiteinrichtung 7 ein Unterdruck zum Ansaugen der für die Wassergewinnung abgezweigten Abgase 12 erzeugt.
In dieser Ausgestaltung ist die als Wärmetauscher ausgebildete Kühleinrichtung 13 innerhalb des Triebwerksaußenmantels 21, noch vor der Schubdüse 22 so vorteilhaft angeordnet, daß die vom Wärmetauscher abgegebene Wärme zur Schuberhöhung genutzt werden kann. Dies mindert den Schubverlust durch die Entnahme der Triebwerksabgase 12.
Die Wasseraufbereitungseinrichtung 18 ist an geeigneter Stelle, vorzugsweise in der Nähe bestehender Wasserversorgungssysteme, im Flugzeug angeordnet. Entsprechend der Weiterverwendung ist eine Behandlung des gewonnenen Wassers mit an sich bekannten Maßnahmen notwendig. Als Hauptverunreinigungen treten im wesentlichen die wasserlöslichen Produkte vom unverbrannten Kohlenwasserstoff, Ruß, Schwefel- und Stickstoffverbindungen auf. Eine Möglichkeit zur Entfernung von Ruß besteht in einem Partikelfilter. Die Säuren der beispielsweise vorkommenden Schwefel- und Stickoxide werden mit geeigneten Mitteln neutralisiert. Entstehende Salze werden beispielsweise über Ionentauscher entfernt. Geschmacksbeeinträchtigende Reste werden mittels Aktivkohle herausgefiltert.
Das so gewonnene Wasser hat eine hohe Güte, ist keimfrei und entspricht den Anforderungen an die Qualität von Trinkwasser. Je nach Verwendungszweck ist ein Verzicht auf bestimmte Reinigungsmaßnahmen vorteilhaft, wenn beispielsweise nur Brauchwasser für die Toilettenspülung erzeugt wird.

Eine weitere, nicht dargestellte Ausgestaltung der Erfindung besteht darin, daß das Wasser aus den Abgasen eines Hilfstriebwerkes, genannt APU (auxiliary propulsion unit), eines Flugzeuges gewonnen wird. In der Regel besitzt jedes Passagierflugzeug ein solches Hilfstriebwerk, mit dessen Hilfe am Boden der an Bord erforderliche elektrische Strom, sowie Wärme für die Beheizung erzeugt wird. Im Fluge wird dieses Triebwerk abgeschaltet und die benötigte Energie wird üblicherweise als Zapfluft hinter den Verdichtern des Haupttriebwerkes abgezogen. Da die Zapfluft zu einer Minderung des Wirkungsgrades der Triebwerke führt, ist es möglicherweise vorteilhaft, auch während des Fluges ein derartiges Hilfstriebwerk zur Erzeugung von Energie für verschiedenste Verbraucher einzusetzen und damit die Haupttriebwerke zu entlasten.
Die beim Betreiben eines derartigen Hilfstriebwerkes entstehenden Abgase können vorteilhaft zur Wassererzeugung nach dem oben beschriebenen Verfahren nutzbar gemacht werden.

### Bezugszeichenliste

- 1 -: Triebwerk
- 2 -: Abgasstrom aus Triebwerk
- 3 -: Turbinenstufen
- 3a -: letzte Turbinenstufe
- 4 -: Wassergewinnungsanlage
- 5 -: Düsenmantel
- 6 -: Entnahmeöffnung
- 7 -: Abgasleiteinrichtung
- 8 -: Meß- und Regeleinrichtung
- 9 -: Innenwand der 7
- 10 -: Außenwand der 7
- 11 -: Bypass-Luftstrom
- 12 -: Abgasstrom zur Wassergewinnung
- 13 -: Kühleinrichtung/Wärmetauscher
- 14 -: Wasserabscheider
- 15 -: Profile in 14
- 16 -: Sammelleitung
- 17 -: Pumpeinrichtung
- 18 -: Wasseraufbereitungseinrichtung
- 19 -: Restabgasstrom
- 20 -: Ejektor
- 21 -: Triebwerksaußenmantel
- 22 -: Schubdüse
- 23 -: Wassertank

## Patentansprüche

1. Verfahren zur Wasserversorgung an Bord eines mit Triebwerken ausgerüsteten Flugzeuges, welches mit einem Brennstoff, beispielsweise Kerosin oder Wasserstoff angetrieben wird,
**dadurch gekennzeichnet, daß**
die bei der Verbrennung des Brennstoffes im Triebwerk entstehenden Abgase an geeigneter Stelle, etwa hinter einer Turbinenstufe, zumindest teilweise entnommen werden,
die entnommenen Abgase auf eine solche Temperatur abgekühlt werden, daß ein wesentlicher Teil des als Verbrennungsprodukt im Abgas enthaltenen Wassers auskondensiert,
das auskondensierte Wasser mit geeigneten Mitteln, beispielsweise einem Wasserabscheider, abgeschieden wird,
das abgeschiedene Wasser gesammelt wird,
das gesammelte Wasser entsprechend der Weiterverwendung gegebenenfalls bis zu einer geforderten Wasserqualität aufbereitet wird und
einem Wassertank und/oder vorhandenen Wasserversorgungssystemen zugeführt wird.

2. Verfahren nach Anspruch 1,
**dadurch gekennzeichnet, daß**
die entnommene Abgasmenge entsprechend der Menge des zu erzeugenden Wassers und der Auskondensationsbedingungen geregelt wird.

3. Verfahren nach einem der Ansprüche 1 oder 2,
**dadurch gekennzeichnet, daß**
die entnommenen Abgase mittels einer Unterdruckerzeugungeinrichtung abgeleitet werden.

4. Verfahren nach einem der Ansprüche 1 bis 3,
**dadurch gekennzeichnet, daß**
die entnommenen Abgase über einen Oxidationskatalysator geleitet werden.

5. Verfahren nach einem der Ansprüche 1 bis 4,
**dadurch gekennzeichnet, daß**
die entnommenen Abgase mittels der im Triebwerk strömenden Bypass-Luft abgekühlt werden.

6. Verfahren nach einem der Ansprüche 1 bis 5,
**dadurch gekennzeichnet, daß**
das auskondensierte Wasser mittels einer Pumpeinrichtung zur weiteren Behandlung geleitet wird.

7. Verfahren nach einem der Ansprüche 1 bis 6,
**dadurch gekennzeichnet, daß**
das gesammelte Wasser zum Erreichen der geforderten Wasserqualität zumindest eine Reinigungsstufe durchlaufen wird.

8. Verfahren nach einem der Ansprüche 1 bis 7,
**dadurch gekennzeichnet, daß**
in den Reinigungsstufen mindestens eine Reinigung von Partikelfiltern und entsprechend der der geforderten Wasserqualität bekannte Wasserbehandlungsmaßnahmen durchgeführt werden.

9. Verfahren nach einem der Ansprüche 1 bis 8,
**dadurch gekennzeichnet, daß**
die durch Auskondensation des Wassers an geeigneter Stelle noch vor der Schubdüse anfallende Energie zur Schuberhöhung genutzt wird.

10. Verfahren nach einem der Ansprüche 1 bis 8,
**dadurch gekennzeichnet, daß**
die durch Auskondensation des Wassers entstehende Energie zum Eindampfen von verbrauchtem Wasser aus Abwassertanks des Versorgungssystems genutzt wird.

11. Verfahren nach einem der Ansprüche 1 bis 10,
**dadurch gekennzeichnet, daß**
die Abgase aus den Haupttriebwerken zur Wassererzeugung genutzt werden.

12. Verfahren nach einem der Ansprüche 1 bis 10,
**dadurch gekennzeichnet, daß**
die Abgase aus Hilfstriebwerken zur Wassererzeugung genutzt werden.

13. Einrichtung zur Durchführung des Verfahrens zur Wasserversorgung nach Anspruch 1,
**dadurch gekennzeichnet, daß**
innerhalb des Triebwerkes an geeigneter Stelle hinter einer Turbinenstufe, vorzugsweise etwa nach der letzten Turbinenstufe, eine am Umfang der Kerntriebwerksverkleidung vorgesehene Entnahmeöffnung mit daran angeschlossener Abgasleiteinrichtung angeordnet ist,
daran eine vorzugsweise als Hautwärmetauscher ausgebildete Kühleinrichtung angeschlossen ist, die an der von der Bypass-Luft umströmten Triebwerksverkleidung angeordnet ist,
der Endbereich der Kühleinrichtung als Wasserabscheider ausgebildet ist,
eine Sammelleitung im Bereich des durch Schwerkraftwirkung gesammelten Wassers im Wasserabscheider angeschlossen ist,
die Sammelleitung über eine Wasseraufbereitungseinrichtung mit einem Wassertank und/oder einem vorhandenen Wasserversorgungssystem verbunden ist.

14. Einrichtung nach Anspruch 13,
**dadurch gekennzeichnet, daß**
ein wesentlichen Bestandteil der Abgasleiteinrichtung eine Vorrichtung zur Regelung der entnommenen Abgasmenge und/oder der Kühleraustrittstemperatur ist.

15. Einrichtung nach Anspruch 13 oder 14,
**dadurch gekennzeichnet, daß**
an der Abgasaustrittsöffnung des Wasserabscheiders eine Unterdruckerzeugungseinrichtung, vorzugsweise ein Ejektor, angeschlossen ist,

16. Einrichtung nach einem der Ansprüche 13 bis 15,
**dadurch gekennzeichnet, daß**
eine Förderpumpe mit der Sammelleitung verbunden ist.
